# EUROPEAN PATENT APPLICATION

(11) **EP 1 199 871 A2**
(43) Date of publication of application: **24.04.2002**
(21) Application number: 01402586.0
(22) Date of filing: 08.10.2001
(51) Int. Cl.: H04M 3/436

(54) **System and method for confirming calls in a telephone system**

(30) Priority: 19.10.2000 ES 200002507
(71) Applicant: ALCATEL, 75008 Paris (FR)
(72) Inventor: Lopez Almansa, Eugenio, 28019 Madrid (ES); Burriel Lluna, Rafael, 28220 Majadahonda, Madrid (ES); Gomez Mateo, Daniel, 28047 Madrid (ES); Aguilar Sanchez, Luciano Jesus, 28005 Madird (ES)
(74) Representative: Lamoureux, Bernard

(57) **Abstract**

System and method for confirming calls in a telephone system. The method is based in that a user subscribed to this service has the option of selecting a call confirmation state. According to the method of the invention, a user selects an incoming call confirmation state, and in the event of a call occurring for this user, the calling party receives a confirmation request by means of a message that is sent to him from a control centre (5), this latter party being that which decides to set up the call. Said control centre (5) is situated either in the telephone network or in the telephone terminal itself.

## Description

The present invention refers to a method for providing users of both mobile and fixed telephones with a call confirmation service, which is based on the telephone user having the possibility of selecting a call confirmation state. When a telephone user is in this state, and an incoming call arrives for said user, the calling party is required to acknowledge confirmation of the call for the completion of the setting up of the call. In this manner, it is the calling user who decides whether the call is to be set up or not.

### BACKGROUND OF THE INVENTION

In a telephone service, be it mobile or fixed, situations arise in which a telephone user can find himself in a situation in which he does not wish to be interrupted by a telephone call, for example when he is in a meeting, or driving a motor vehicle, or in an emergency situation, etc. Thus, any call that is made to his terminal under these circumstances can produce undesirable, and even harmful, consequences for said user. To overcome this problem, a known solution consists in enabling the telephone user to select the telephone numbers from which he permits incoming calls to be received. In this manner, the calls coming from non-selected telephone numbers are not received.

Nonetheless, this solution does not resolve the aforementioned problem effectively, since there can be incoming calls, from some telephone numbers selected by the user, which are not important, and on the contrary, there can be very urgent or important calls that are rejected because the telephone number corresponding to the calling user has not been previously selected by the called user.

As a consequence it would be desirable to provide a solution that permits the selection of urgent or important calls in a more effective manner.

### DESCRIPTION OF THE INVENTION

In order to overcome the problem outlined above, the system and the method for confirming calls, objects of the present invention, have been proposed.

The method of the invention is based on providing the user with a telephone service, both mobile or fixed, with a new procedure for confirming calls which is based on granting the user the option of selecting on his telephone terminal, by means of a key or combination of keys or any other method, two different states insofar as call reception is concerned.

A first state is that of the reception of all incoming calls to the telephone without limitation whatsoever; a state which could be termed "normal".

A second state, which the invention proposes, is a call confirmation state. When a telephone is in this second state, on receiving an incoming call it generates a return message to the calling party alerting him that the called user has selected said call confirmation state for the time being, granting him the possibility of confirming the setting up of his call. In this manner, the calling party decides whether his call should be set up or not, for reasons which in his own consideration justify said setting up of the call. Examples of this type of call are many and varied, for example it may concern a call having a certain importance regarding professional, commercial or personal matters, etc.; or an emergency call in the case of accidents, illness, travel arrangements and the like. If confirmation is given on the part of the calling party, the user of the called telephone receives the call, and in the event of non-confirmation, the call is not set up, it being possible to access the voice mailbox, redirect it to another telephone number that may be, for example, of an assistant or a secretary of the called user, or any other option of this nature.

With this solution, when the user of a telephone has to attend a meeting or some other occasion at which he does not wish to be interrupted and wishes to receive only calls which are important or urgent, he shall activate said second state of received call confirmation on his telephone terminal, whereby he shall only receive those calls which are truly urgent or important.

Thus, an object of the present invention is that of providing a method for selecting incoming calls in a telecommunications system employing telephone terminals, characterised in that it comprises the steps of:
- selection of a call confirmation state in a terminal in such a manner that in said state the direct reception of incoming calls is avoided;
- when a call originated in a calling terminal is made to said terminal, an alerting message is transmitted to said calling terminal in order to request confirmation that its call has to be set up; and
- setting up of said call if the calling terminal confirms that the call has to be set up.

According to one aspect of the invention the handling of the call confirmation service comprises the steps of:
- storing the call confirmation state;
- sending a return message to the calling terminal, in the event that the called terminal is presently in said call confirmation state;
- reception of a call confirmatory message sent by the calling terminal; and
- completion of the setting up of the call.

According to another aspect of the invention the handling of the call confirmation service is performed by the network infrastructure.

According to another aspect of the invention the handling of the call confirmation service is performed by the very terminal which is receiving the incoming call.

According to yet another aspect of the invention, completion of the call set-up procedure in the called terminal itself comprises the following steps:
- making of a call to the called terminal by the user of the calling terminal;
- reception of said call by the called terminal in its control centre;
- sending of an alerting message produced by the control centre of said called terminal to said calling terminal requesting its confirmation; and
- completion of the setting up of the call by the called terminal on receiving said confirmation from the calling terminal.

Another object of the invention is that of providing a telephone terminal for carrying out the steps of the method explained above.

An additional object of the invention is that of providing a telephone network for carrying out the steps of the method of the invention.

An additional object of the invention is that of providing a control centre capable of implementing the call set-up procedures both in the called terminal telephone and in the telephone network.

These and other characteristics of the invention shall be described in fuller detail in the examples of embodiment with the assistance of the drawings attached hereto.

### BRIEF DESCRIPTION OF THE DRAWINGS

Figure 1 is a block diagram showing a preferred embodiment of the present invention, in which it is the network infrastructure that handles the call confirmation service.
Figure 2 is a block diagram showing another preferred embodiment of the present invention, in which it is the terminal receiving the incoming call that handles the call confirmation service.

### DESCRIPTION OF THE PREFERRED EMBODIMENTS

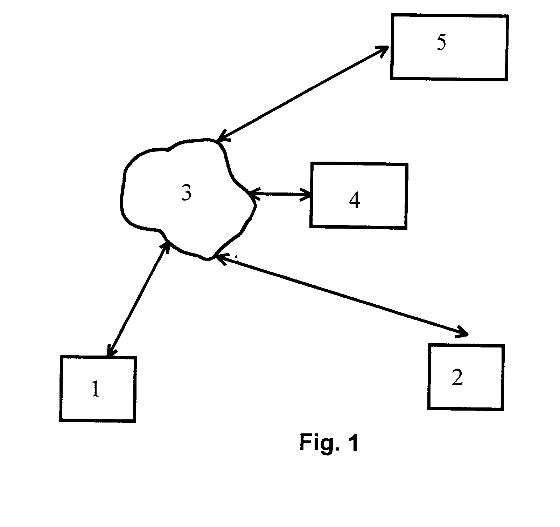

With reference to figure 1, a description of a preferred embodiment in which it is the network infrastructure that handles the call confirmation procedure is provided below.

The user of terminal 2 opts to make use of the call confirmation service. Said user selects the call confirmation state on his terminal by activation of a key or combination of keys or voice recognition or any other method known in the state of the art. The information of this change of state is sent to a control centre 5 in a conventional manner.

Now suppose that the user of another terminal 1 wishes to make a call to terminal 2. On initiating the call, the latter is connected through the network 3 to the control centre 5. The control centre 5 has the information of the call confirmation state in which terminal 2 is and thereafter a return message is produced either in the control centre, or in some other point of the network, said message being sent to terminal 1, alerting it of the call confirmation state in which terminal 2 is, and offering the user of terminal 1 the possibility of confirming the call if said user considers his call to be truly important or urgent.

If the user of terminal 1 confirms the call, said confirmation is received by the control centre 5, which in turn advises the network 3 that the call can be set up, whereby said call shall be received by terminal 2. On the other hand, if no confirmation is received from the user of terminal 1, the control centre produces another message for the network 3 with appropriate instructions, like for example the possibility that the call should be directed to a call mailbox 4, which can be consulted later by terminal 2, or that it be directed to another telephone number, for example of a known person, an assistant or a secretary of the user of the terminal 2, or any other option of this kind.

It is to be pointed out that the manner in which the user of calling terminal 1 confirms his call can be by means of carrying out any of the procedures presently available in telephony for this purpose, for example pressing a digit or giving a spoken answer.

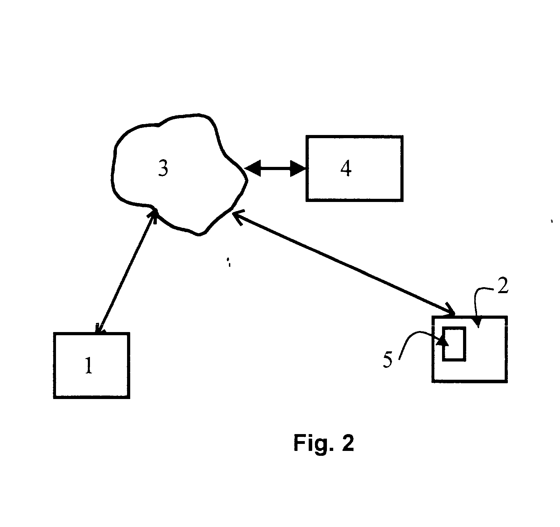

An alternative embodiment of the invention is described hereunder making reference to figure 2 in which it is terminal 2 itself that receives the incoming call that handles the call confirmation procedure.

According to this embodiment, the user of terminal 2 opts for making use of the call confirmation service. Said user selects the call confirmation state on his terminal by activation of a key or combination of keys or voice recognition or any other method known in the state of the art. The information of this change of state is stored in terminal 2 itself for example in its memory.

Now suppose that the user of terminal 1 wishes to make a call to terminal 2.

On initiating the call, this is connected through the telephone network 3 to terminal 2. Since terminal 2 is in the call confirmation state, said terminal 2 transmits a return message to terminal 1, alerting it of the call confirmation state in which terminal 2 is, and offering the user of terminal 1 the possibility of confirming the call if said user considers his call to be truly important or urgent.

If the user of terminal 1 confirms the call, said confirmation is received by the control centre 5, which in this case is located in terminal 2, which proceeds to set up the communication. Otherwise, the call shall be treatable in like manner to that described in the first preferred embodiment.

The procedure of confirmation between the two terminals is, preferentially, performed in the following manner:
- first the user of terminal 1 makes the call to terminal 2;
- terminal 2 receives said call in its control centre 5 and immediately transmits a return message to terminal 1 requesting confirmation; and
- when confirmation is received by terminal 2, the control centre proceeds to the setting up of the communication.

In this manner the setting up procedure of the communication is carried out between the terminals with no need for the network 3 to be altered.

## Claims

1. Method for selecting incoming calls in a telecommunications system using telephone terminals (1; 2), **characterised in that** it comprises the steps of:
- selection of a call confirmation state in a terminal (2) in such a manner that in said state the direct reception of incoming calls is avoided;
- when a call is made to said terminal (2) coming from a calling terminal (1), it sends an alerting message to said calling terminal (1) to request it for confirmation that its call ought to be set up; and
- setting up of said call if the calling terminal (1) confirms that the call has to be set up.

2. Method of claim 1 in which the handling of the call confirmation service comprises the steps of:
- storing the call confirmation state;
- sending a return message to the calling terminal (1), in the event that the called terminal (2) is in said call confirmation state;
- reception of a message confirming the call sent by the calling terminal (1); and
- completion of the setting up of the call.

3. Method of claim 2 in which the handling of the call confirmation procedure is performed by a control centre (5) in a telephone network infrastructure (3).

4. Method of claim 2 in which the handling of the call confirmation procedure is performed by a control centre (5) in the very terminal (2) which receives the incoming call.

5. Method of claim 4 in which the set-up procedure of the call is completed by means of the following steps:
- making of a call by the user of the calling terminal (1) to the called terminal (2);
- reception of said call by the called terminal (2) in its control centre (5);
- sending of an alerting message produced by the control centre (5) of said called terminal (2) to said calling terminal (1) requesting its confirmation; and
- completion of the setting up of the call by the called terminal (2) on receiving said confirmation from the calling terminal (1).

6. Method according to any of the previous claims in which a non-confirmed call is stored.

7. Method according to any of claims 1 to 4 in which a non-confirmed call is redirected to another telephone number.

8. Telephone terminal for carrying out the steps of claim 1.

9. Telephone terminal of claim 8 for carrying out the steps of claim 2.

10. Telephone network for carrying out the steps of claim 2.

11. Control centre in order to be included in the telephone terminal of claim 9 or in the telephone network of claim 10.
